# EUROPEAN PATENT SPECIFICATION

(11) **EP 1 870 272 B1**
(45) Date of publication and mention of the grant of the patent: **12.12.2012**
(21) Application number: 07011964.9
(22) Date of filing: 19.06.2007
(51) Int. Cl.: B60J 7/00, B60R 13/07, B60J 10/00, B60J 10/10, B60J 7/14, B60J 1/18

(54) **Vehicle with a retractable roof and a draining structure for the retractable roof**
Fahrzeug mit einem einziehbaren Dach und einer Abflussanordnung für das einziehbare Dach
Véhicule avec un toit rétractable et une structure de drainage pour le toit rétractable

(30) Priority: 19.06.2006 JP 2006168274
(43) Date of publication of application: 26.12.2007
(73) Proprietor: Webasto AG, 82131 Stockdorf (DE)
(72) Inventor: Yamada, Akio, Higashihiroshima-City 739-0038 (JP); Takeshita, Hiroshi, Higashihiroshima-City 739-0038 (JP); Matsunobu, Tomoaki, Hiroshima (JP); Tanoue Hiroki, Hiroshima (JP)

(56) References cited:
- DE-U1-202006 002 765
- JP-A- 2003 054 265
- US-A1- 2006 125 292

## Description

### Technical Field.

This invention relates to a vehicle with a retractable roof and drainage structure for the retractable roof, in particular, to a structure for draining water that drips along weatherstripping.

### Technical Background.

There are known retractable roofs of prior art that have a roof member that moves freely between a closed configuration that covers the vehicle passenger compartment and an open configuration in which the vehicle passenger compartment is open (see Patent Reference #1).Patent Reference #1. Laid-open patent number JP-2003-054 265 A.

Such a roof member is composed of multiple roof component members, and the roof member in Patent Reference #1 is composed of a front roof panel that covers the top of the vehicle passenger compartment, a rear window that covers the rear of the vehicle passenger compartment, and a middle roof panel that is between the rear window and the front roof panel. Weatherstripping is placed between the roof component members, and between each roof component member and the body, to form a tight seal within the vehicle passenger compartment when the roof member is in the closed configuration, providing protection from wind and rain.

In more detail, in the retractable roof of Patent Reference #1, middle weatherstripping extends as a seal along the lower edge of the middle roof panel between the middle roof panel and the body or deck panel, and rear weatherstripping extends as a seal along the lower edge of the rear window between the rear window and the body or deck panel. Also, the weatherstripping contains two nearly parallel seal portions along its extent, and a drainage channel that is formed between the two seal portions. A drainage hole is formed in the drainage channel of the middle weatherstripping, and the upstream end of a drainage hose is connected to this drainage hole. The drainage hose is laid out within the vehicle passenger compartment, and its downstream end is connected to a vehicle side drain.

JP 2003 054 265 A discloses a vehicle with a retractable roof and a drainage structure for the retractable roof according to the preamble of claim 1.

When the roof member is in the closed configuration, the middle and rear weatherstripping that are formed in this way connect to each other to form continuous weatherstripping, and their drainage channels are continuous. Therefore, the middle and rear weatherstripping are formed so that, when the roof member is in the closed configuration, they seal the lower edge of the middle roof panel and the lower edge of the rear window against the body and deck panel, guiding water that enters the weatherstripping along the drainage channel to the drainage hole, and draining it through the drainage hose.

The drainage hose is connected to the weatherstripping for the middle roof panel, and the middle roof panel can open and close, so the drainage hose must follow along with the opening and closing operation of the middle roof panel. Accordingly, in the retractable roof of Patent Reference #1, the drainage hose is formed with a flexible twisting shape (a wave-shaped hose).
.

### Invention Disclosure.

### Problems That the Invention Tries to Solve.

This flexible twisting hose is capable of bending and stretching, as it repeatedly folds in and out with its twisting structure, but as it repeatedly bends and stretches it is possible for it to break where it folds in and out, which means that operating endurance is a problem.

Also, accompanying the opening and closing of the middle roof panel, the distance changes between the drainage hole of the weatherstripping and the vehicle side drain, but there is a limit to the change inlength that the twisting portion can absorb, so it is necessary to specify a length for the drainage hose that accommodates the longest distance between the drainage hole and the vehicle side drain. As a result, with the opening and closing of the retractable roof, the drainage hose may be greatly bent. So, it is necessary to provide space to allow the drainage hose to bend within the storage compartment for the retractable roof. And, if the drainage hose is greatly bent so that part of it hangs lower than the vehicle side drain, the water that has flowed into the drainage hose from the drainage opening will collect in that lower portion, which may make it impossible for it to drain well.

This invention was conceived with these problems in mind, and its purpose is to improve the operating endurance of the drainage hose of a retractable roof in which a drainage hose is connected to the roof member, while improving how the drainage hose is laid out and making it possible for drainage to proceed smoothly via the drainage hose.

### Means for Solving the Problems.

This invention makes it possible for the downstream end of the drainage hose to rotate freely with respect to the vehicle side drain and freely move in and out.

The object of claim 1 of the invention is a vehicle with a retractable roof and a drainage structure for the retractable roof, consisting of a roof member provided so as to be able to move freely between a closed configuration that covers a vehicle passenger compartment and an open configuration in which the vehicle passenger compartment is open, weatherstripping that extends along the edge of the roof member and has a drainage channel that extends along the edge, and a drainage hose that connects the weatherstripping with a vehicle side drain provided on the side of the vehicle. And, the drainage hose can rotate freely with respect to the vehicle side drain and can freely move in and out, and accompanying the opening and closing operation of the roof member the drainage hose freely rotates with respect to the vehicle side drain and moves in and out.

With this structure, all or part of the water that flows along the drainage channel of the weatherstripping is conveyed by the drainage hose to the vehicle side drain, and then drains from there.

And, by attaching the drainage hose to the vehicle side drain so that it can rotate freely, even if there is a force that works in the return direction on the drainage hose during the opening and closing of the roof member, the drainage hose can freely rotate, so that an excessive load does not act on the drainage hose, and it can follow along with the opening and closing of the roof member. Also, by attaching the drainage hose to the vehicle side drain so that it can freely move in and out, even if the distance changes between the part of the drainage hose that connects to the weatherstripping and the vehicle side drain during the opening and closing of the roof member, the drainage hose can freely move in and out from the vehicle side drain, so that an excessive load does not act on the drainage hose, and it can follow along with the opening and closing of the roof member. As a result, it is possible to improve the operating endurance of the drainage hose.

Also, as explained above, by attaching the drainage hose to the vehicle side drain so that it can freely move in and out, as the distance changes between the part of the drainage hose that connects to the weatherstripping and the vehicle side drain during the opening and closing of the roof member, the length of the drainage hose that comes out from the vehicle side member freely adjusts, which makes it possible to prevent the drainage hose from bending greatly. As a result, it is possible to improve the layout because there is no need to provide space for the drainage hose to bend greatly, and it is possible to make draining smoother by preventing the drainage hose from bending lower than the vehicle side drain.

Claim 2 of the invention provides an insertion hole on the vehicle side drain of Claim 1 of the invention, with a diameter larger than the outer diameter of the drainage hose, and the downstream end of the drainage hose is inserted into the vehicle side drain through the insertion hole, and a stopper is provided at a location within the vehicle side drain to stop the drainage hose from coming out of the insertion hole.

With this structure, by inserting the drainage hose into the insertion hole of the vehicle side drain, where the diameter of the hole is larger than the outer diameter of the hose, it is possible to allow the drainage hose to rotate freely with respect to the insertion hole, and it is possible to allow it to freely move in and out from the insertion hole. Also, by providing a stopper on the portion of the downstream end of the drainage hose that is located within the vehicle side drain, even though the drainage hose can freely move in and out from the insertion hole, it is possible to prevent the drainage hose from coming completely out of the insertion hole.

In Claim 3 of the invention, the roof member of Claim 1 or 2 of the invention includes a front roof panel that covers the top of the vehicle passenger compartment, a rear window that covers the rear of the vehicle passenger compartment, and a middle roof panel that is located between the rear window and the front roof panel, and the weatherstripping includes middle weatherstripping that extends along the lower edge of the middle roof panel and has a middle drainage channel that extends along the edge, and rear weatherstripping that extends along the lower edge of the rear window and has a rear drainage channel that extends along the edge and, when the roof member is in the closed configuration, the middle and rear weatherstripping connect to each other to form continuous lower edge weatherstripping in a configuration where the rear drainage channel and middle drainage channel are continuous, and the drainage hose is connected to either part of the weatherstripping at the junction of the rear and middle weatherstripping.

With this structure it is possible to specifically define the structure of the retractable roof and weatherstripping. In other words, when the retractable roof is in the closed configuration, continuous lower edge weatherstripping is formed, with a continuous drainage channel along the lower edge of the middle roof panel and the lower edge of the rear window. In this way, water that flows along the surface of the middle roof panel or rear window to the lower edge weatherstripping enters this continuous drainage channel and is guided by the drainage channel to be drained. The drainage hose is connected at the junction of the rear weatherstripping and middle weatherstripping to either part of the weatherstripping, so that all or part of the water in the drainage channel flows into the drainage hose, and is guided by the drainage hose to the vehicle side drain, and drained from there.

In Claim 4 of the invention, when the roof member of Claim 3 of the invention is in the closed configuration, the rear weatherstripping connects to the middle weatherstripping along the inside of the vehicle passenger compartment, and a water collector is provided at the junction to collect water that drips from the rear drainage channel and the middle drainage channel, and the drainage hose is connected to the rear weatherstripping to make it continuous with the water collector.

With this structure, the water in the rear and middle drainage channels may leak from the junction of the rear weatherstripping and middle weatherstripping. So, a water collector is provided on the rear weatherstripping at a location on the vehicle passenger compartment side of either the rear or middle weatherstripping, that is, a relatively low position, and the drainage hose is connected to the rear weatherstripping so as to be continuous with the water collector, so that the water that leaks from the junction collects in the collector, so that it can drain from the drainage hose.

### Effect of the Invention

According to this invention, a drainage hose is connected to the weatherstripping of a retractable roof, and the hose can freely rotate with respect to a vehicle side drain, and freely move in and out, so that it is possible to improve the operating endurance of the drainage hose, and it is possible to improve the layout because there is no need to maintain a space for the drainage hose to bend greatly, and it is possible to make draining smoother by preventing the drainage hose from bending lower than the vehicle side drain.

### Industrial Usability

As explained above, this invention relates to a drainage structure for a retractable roof, in particular, a structure for draining water that flows along weatherstripping of the roof member.

### Simple Explanation of the Figures

Figure 1. Side view of a vehicle with a retractable roof of this invention in the operating position.
Figure 2. Side view of a vehicle with a retractable roof in the storage position.
Figure 3. Side view that shows the link mechanism of a retractable roof in the operating position.
Figure 4. Decomposed strabismus view of the link mechanism.
Figure 5. Side view showing the link structure of a retractable roof in a position between the operating position and the storage position.
Figure 6. Side view showing the link structure of a retractable roof in a position between the operating position and the storage position.
Figure 7. Side view that shows the link mechanism of a retractable roof in the storage position.
Figure 8. Strabismus view looking diagonally from the rear of the car when the retractable roof is in the operating position.
Figure 9. Strabismus view looking diagonally from the rear at the weatherstripping along the lower edge of the rear window and middle roof panel.
Figure 10. Cross-section along the line X-X in Figure 9.
Figure 11. Cross-section along the line XI-XI in Figure 9.
Figure 12. Enlarged strabismus view of the edge of the lower rear weatherstripping seen from the outside of the vehicle passenger compartment.
Figure 13. Enlarged strabismus view of the edge of the lower rear weatherstripping seen from the outside of the vehicle passenger compartment.
Figure 14. Figure corresponding to Figure 13 when the drainage hose is attached to the lower rear weatherstripping.
Figure 15. Rear view that shows the rear window and rear side trim when the retractable roof is in the operating position.
Figure 16. Side view that shows the rear window and rear side trim when the retractable roof is in the operating position.
Figure 17. Cross-section that shows the connection structure of the drainage hose and vehicle side drain.
Figure 18. Side view that shows the rear window and rear side trim when the retractable roof is in the storage position.

### Best Form for Implementing the Invention.

Next we will use figures to give a detailed explanation of an embodiment of this invention. However, the following explanation of a desirable embodiment is essentially just an example, and it is not the intention to limit this invention to such a purpose or application.

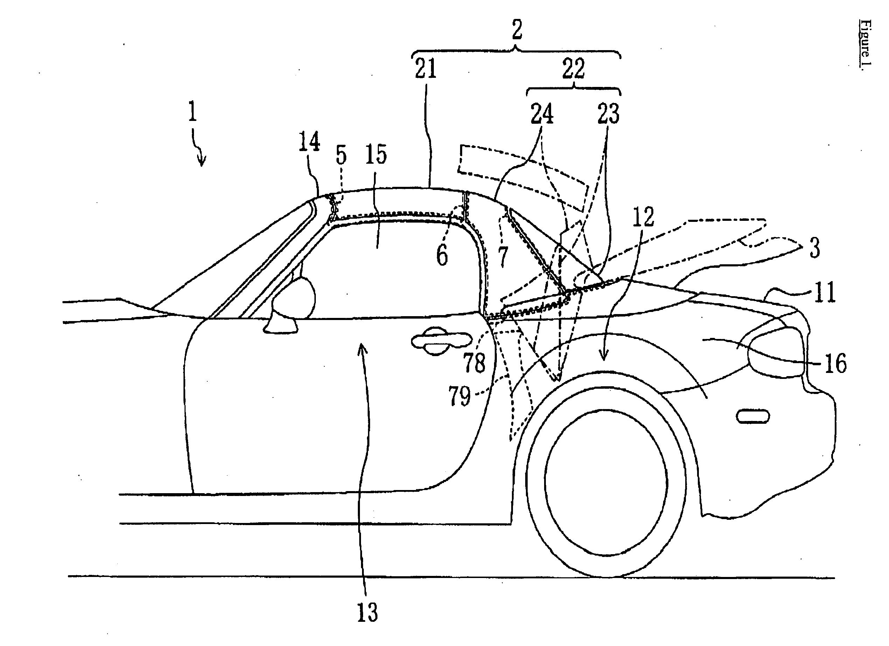

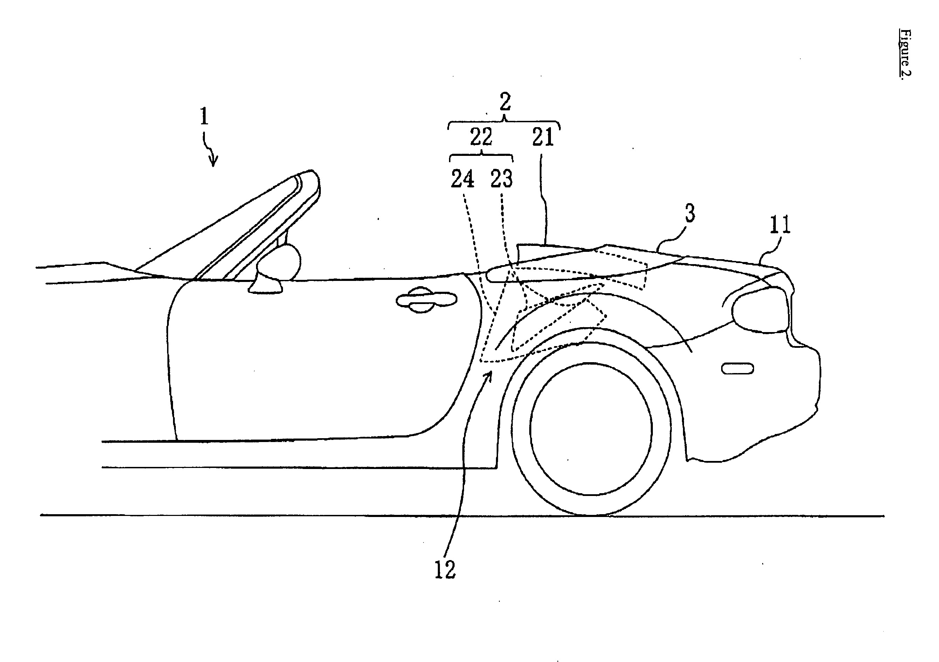

Figures 1 and 2 are representative side views of a vehicle [1] that has a retractable roof of this invention. The retractable roof (roof member) [2] includes a front roof panel [21] that covers the top of the vehicle passenger compartment and a rear roof panel [22] that is located behind the front roof panel [21] and covers the back of the vehicle passenger compartment. The rear roof panel [22] includes a rear window [23] made of a transparent material, and a middle roof panel [24] that is located between the front roof panel [21] and rear window [23] and forms the pillars of the vehicle [1].

Trunk space is provided in the rear of the vehicle [1], and its opening is covered by a trunk lid [11] that can be opened and closed. Between the vehicle passenger compartment [13] and the trunk space there is a storage compartment [12] that is open at the top and in which the retractable roof [2] is stored.

A deck lid [3] is provided for the opening at the top of the storage compartment [12]. When the retractable roof [2] is covering the vehicle passenger compartment [13] (so that the roof [2] is in the operating position described later), the deck lid [3] is positioned between the rear edge of the roof [2] and the edge of the opening of the storage compartment [12]. In this way the deck lid [3] covers the opening at the top of the storage compartment [12], which is open at the top at that location.

By using a link mechanism that is not shown in Figures 1 and 2, the retractable roof [2] can change its position between an operating position (see Figure 1) where it covers the vehicle passenger compartment [13], and a storage position (see Figure 2) where it is stored in the storage compartment and the vehicle passenger compartment [13] is open. And, the deck lid [3] uses a link mechanism (not shown), separate from the link mechanism that changes the position of the retractable roof [2], to change its position between an operating position (see Figures 1 and 2) where it covers part of the opening at the top of the storage compartment [12], and a removed position (see the broken line in Figure 1) in which it has moved diagonally upward behind the operating position so that the opening at the top of the storage compartment [12] is open.

Next we will use Figures 1 and 2 to provide a simple explanation of the operation that changes the position of the retractable roof [2], namely, the operation of switching from the state where the retractable roof [2] covers the vehicle passenger compartment [13] to the state where the vehicle passenger compartment [13] is open. First, the deck lid [3] uses its link mechanism to move from the operating position shown by solid lines in Figure 1 to the removed position shown by broken lines, opening the top of the storage compartment [12]. At the same time, the link mechanism of the retractable roof [2] operates, so that the middle roof panel [24] rotates toward the rear around a certain axis of rotation (rotating in the clockwise direction in Figure 1), and the front roof panel [21] slides diagonally upward toward the rear. Also, the rear window [23] moves forward relative to the middle roof panel [24] while moving upward (see the dotted lines in Figure 1).

The dotted lines in Figure 2 show that, as the operation of the link mechanism of the retractable roof [2] continues, the front roof panel [21] and middle roof panel [24] are folded one on top of the other and stored in the storage compartment [12]. At this time the rear window [23] lies on top of the middle roof panel [24], as seen along an axis that extends in the width direction of the vehicle (as seen in Figure 2).

After the retractable roof [2] is stored in the storage compartment [12], the deck lid [3] uses its link mechanism to move from the removed position to the operating position where it covers part of the storage compartment [12]. In this way, the vehicle passenger compartment [13] is opened.

The operation of returning the retractable roof [2] from the state where the vehicle passenger compartment [13] is open to the state where it covers the vehicle passenger compartment [13] is the opposite of what was described above.

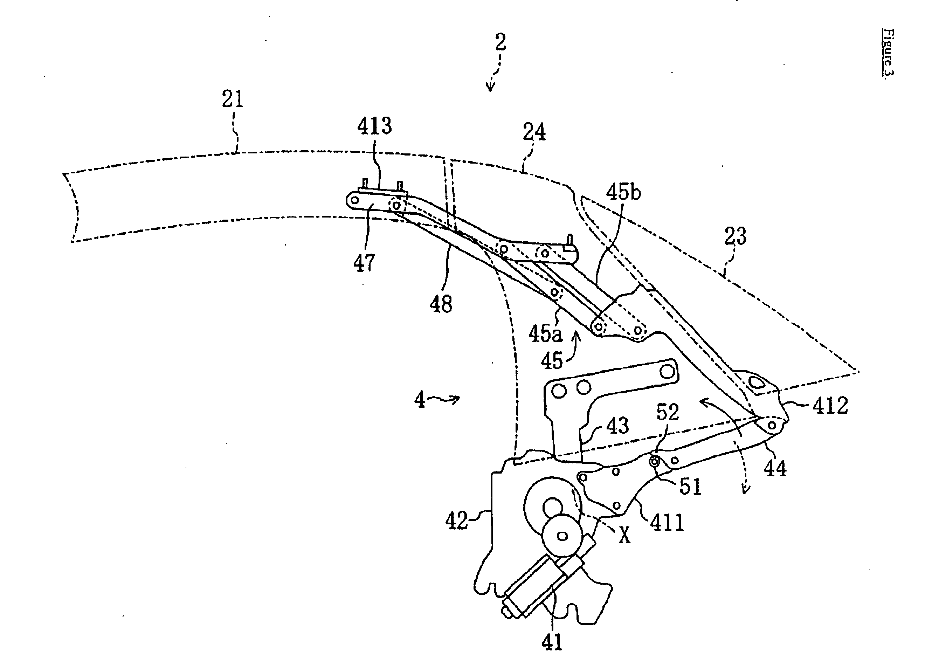

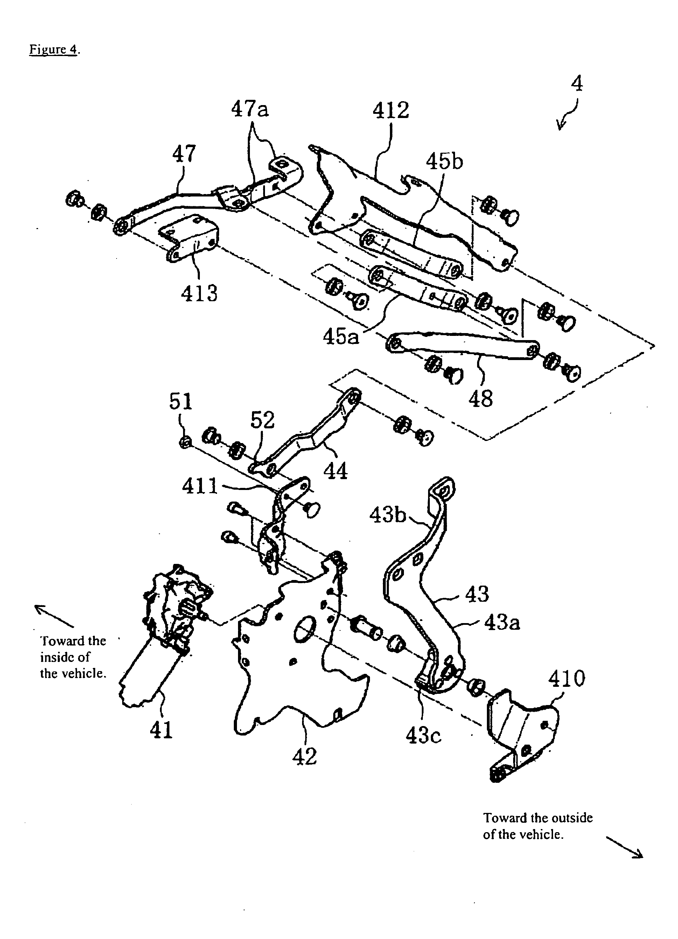

Figures 3 and 4 show the link mechanism [4] of the retractable roof [2]. The link mechanism [4] is inside the retractable roof [2], arranged on both sides in the width direction of the vehicle. Figure 3 is a side view, looking at the link mechanism [4] on the right side of the vehicle from the left side of the vehicle [1], and Figure 4 is a strabismus view that shows the decomposed link mechanism [4] on the left side in the width direction of the vehicle.

The link mechanism [4] is basically connected by a pivoting support to the front roof panel [21] and includes a four-way link composed of links #1 and #2 that are connected by pivoting supports to a member inside the vehicle.

The link mechanism [4] in this embodiment is electrically driven. The drive motor [41] that provides the driving force is fixed by a method such as bolts to a main bracket [42] that is fixed to the vehicle [1]. The main bracket [42] is a shortened plate located within the vehicle passenger compartment [12]. In this way the main bracket [42] is located in a position corresponding to the lower extent of the middle roof panel [24] when the retractable roof [2] is in its operating position.

Attached to the side of the main bracket [42] facing the outside of the vehicle is a lower arm [43]. The lower arm [43] is held between the main bracket [42] and a base plate [410] so that it is possible for it to rotate around an axis of rotation X that extends in the width direction of the vehicle, relative to the main bracket [42].

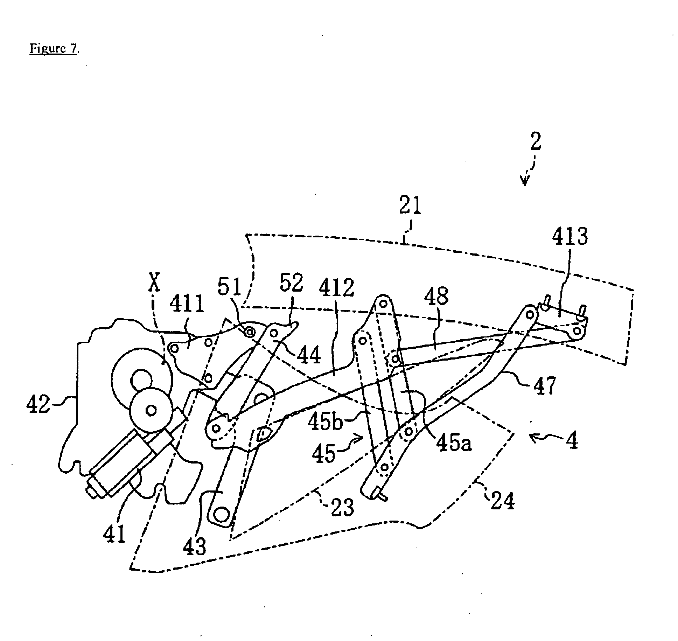

The lower arm [43] has an arm portion [43a] that extends vertically and a fixed portion [43b] that curves around the top of the arm portion [43a] and is fixed to the middle roof panel [24], as will be described later. Also, fixed to the bottom edge portion of the arm portion [43a] is a reduction gear [43c] that meshes with a drive gear that is attached to the drive shaft of the drive motor [41]. In this way, when driven by the drive motor [41], the lower arm [43] rotates around the axis of rotation X, between a position where the arm portion [43a] is upright, as shown in Figure 3, and a position where the arm portion [43a] has moved back, shown in Figure 7.

Also fixed to the main bracket [42] is a window bracket base [411] that extends backward in an upper diagonal direction, from the rear portion near the top of the main bracket [42]. A window link lever [44] is connected by a pivoting support to the rear portion of the window bracket base [411].

Through holes are formed in the front portion and rear portion of the window link lever [44]. A bushing is inserted into the through hole at the front portion of the window link lever [44], and it is fixed to the rear portion of the window bracket base [411] by a method such as a bolt. In this way, the window link lever [44] can rotate around an axis of rotation that extends in the width direction of the vehicle, relative to the window bracket base [411].

Window brackets [412] are fixed at both ends of the rear window [23] in the width direction of the vehicle. The rear portion of each window link lever [44] is attached by a pivoting support to the lower portion of the window bracket [412]. In other words, the window link lever [44] has a bushing inserted into the through hole at its rear portion, and is fixed to the lower portion of the window bracket [412] by a method such as a bolt. In this way, the window link lever [44] rotates with respect to an axis that extends in the width direction of the vehicle around the window bracket [412], or in other words, around the rear window [23].

Two attachment holes are provided at a certain interval in the front and back direction on the upper portion of the window bracket [412]. Link levers #1 and #2 [45a, 45b] are connected with pivoting supports at these two attachment holes, respectively.

The link levers #1 and #2 [45a, 45b] have about the same length, and when the retractable roof [2] is in the operating position they each face forward at a raised angle, laid out in the front and back direction of the vehicle. These link levers #1 and #2 [45a, 45b] have through holes in their upper portions and lower portions. The link levers #1 and #2 [45a, 45b] have bushings inserted into the through holes at their lower portions, and are fixed to the upper portion of the window bracket [412] by a method such as a bolt. In this way the link levers #1 and #2 [45a, 45b] rotate with respect to an axis that extends in the width direction of the vehicle relative to the window bracket [412]. That is, the link levers #1 and #2 [45a, 45b] are connected by pivoting supports to the back window [23].

As explained later, an upper arm [47] is fixed to the upper portion of the middle roof panel [24], extending forward toward the front roof panel [21]. The upper portions of the link levers #1 and #2 [45a, 45b] are connected by pivoting supports to the upper arm [47]. That is, the link levers #1 and #2 [45a, 45b] are fixed to the lower portion of the upper arm [47] by the bushings that are inserted into the through holes on their upper portions by a method such as bolts. In this way, the link levers #1 and #2 [45a, 45b] rotate with respect to an axis that extends in the width direction of the vehicle relative to the upper arm [47]. That is, the link levers #1 and #2 [45a, 45b] are connected by pivoting supports to the middle roof panel [24].

In this way the link levers #1 and #2 [45a, 45b] are connected by pivoting supports to the middle roof panel [24] and to the rear window [23]. Therefore, link levers #1 and #2 [45a, 45b] function as a four-way link (the four-way link #2, [45]) that operates between the middle roof panel [24] and rear window [23], and controls the relative motion of the middle roof panel [24] and rear window [23].

A front roof bracket [413] is fixed near the back portion of the front roof panel [21]. The front portion of the upper arm [47] is connected by a pivoting support to the front roof bracket [413]. In other words, there is a through hole in the front portion of the upper arm [47], and a bushing is inserted in this through hole on the upper arm [47], to fix it to the front roof bracket [413] by a method such as a bolt. In this way the upper arm [47] rotates with respect to an axis that extends in the width direction of the vehicle relative to the front roof bracket [413]. That is, the upper arm [47] is connected by a pivoting support to the front roof panel [21].

The front roof bracket [413] has another attachment hole, further back from the point of pivoting support (the attachment hole) to the upper arm [47]. This other attachment hole is connected by a pivoting support to the upper part of a control link [48].

When the retractable roof [2] is in the operating position, the control link [48] faces forward at a raised angle. Through holes are formed on the upper portion and lower portion of the control link [48]. And, a bushing is inserted into the through hole in the upper portion of the control link [48], fixing it to the attachment hole of the front roof bracket [413] by a method such as a bolt. In this way the control link [48] rotates with respect to an axis that extends in the width direction of the vehicle relative to the front roof panel [21]. That is, the control link [48] is connected by a pivoting support to the front roof panel [21].

An attachment hole is formed in the central portion of link lever #1 [45a]. The lower portion of the control link [48] is connected by a pivoting support to this attachment hole. In other words, a bushing is inserted into the through hole at the lower portion of the control link [48], and it is fixed to the central portion of link lever #1 [45a] by a method such as a bolt. Therefore, the control link [48] rotates with respect to an axis that extends in the width direction of the vehicle relative to link lever #1 [45a]. That is, the control link [48] is connected by a pivoting support to the four-way link #2 [45].

As explained above, the middle roof panel [24] is connected by a pivoting support to the front roof panel [21] via the upper arm [47], and is also connected by a pivoting support to the main bracket [42] via the lower arm [43]. Therefore, the middle roof panel [24] functions as one link of the pair of links that form the four-way link. Also, since the lower arm [43] is driven by the drive motor [41], this link functions as the driving link of the four-way link.

The other link (the driven link) of the pair of links that form the four-way link is comprised of the window link lever [44], rear window [43] (window bracket [412]), link levers #1 and #2 [45a, 45b], and the control link [48].

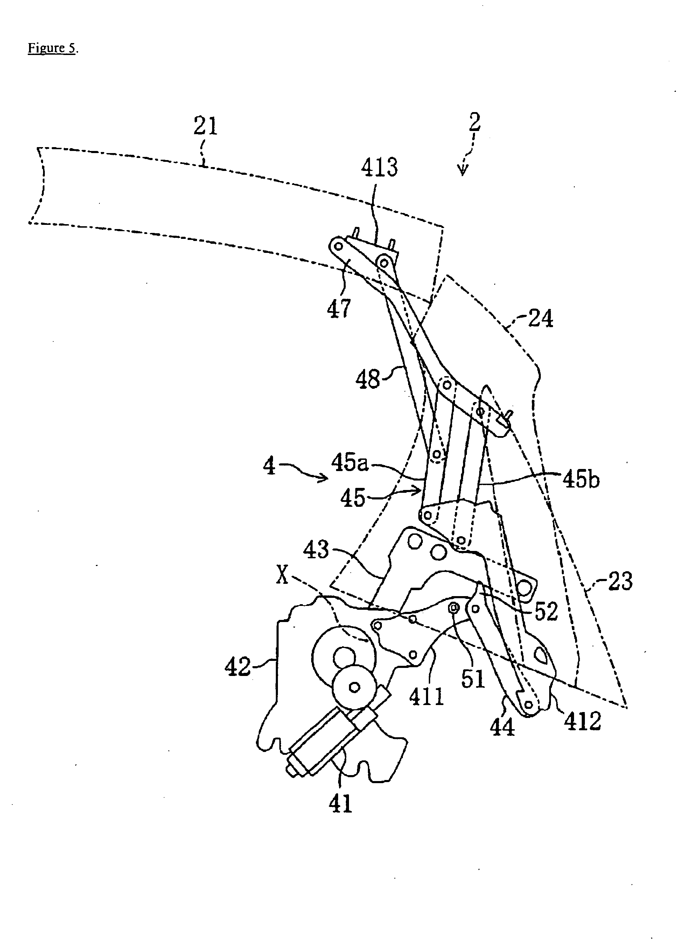

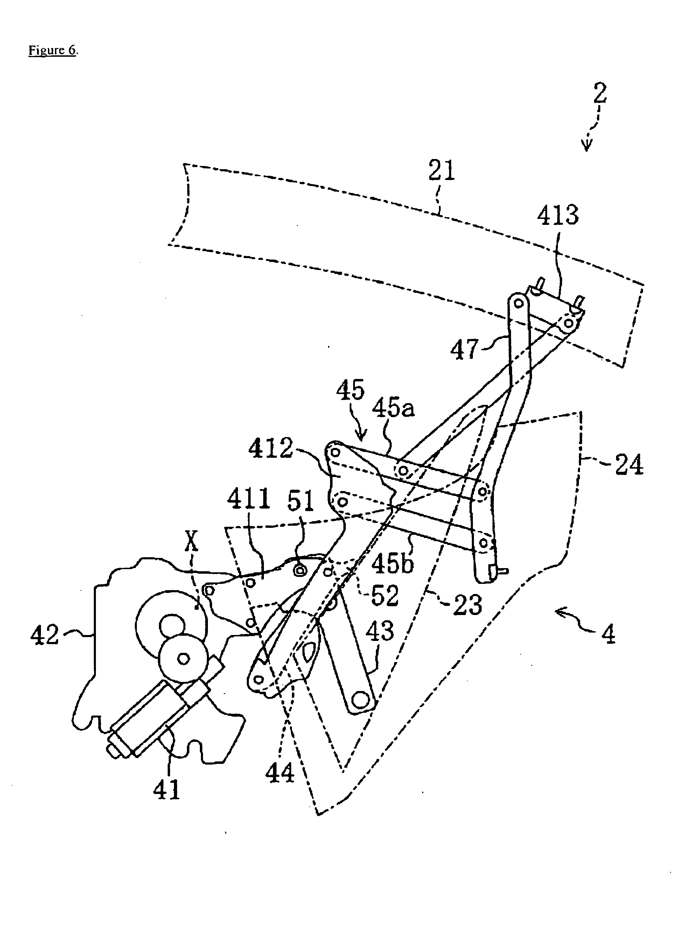

The retractable roof [2] with this structure operates as shown in Figures 3 and 5 through 7 to change its position from the operating position to the storage position. Figure 3 shows the retractable roof [2] when it is in the operating position (the closed configuration), Figure 7 shows the retractable roof [2] when it is in the storage position (the open configuration), Figure 5 shows the retractable roof [2] during the process of changing its position from the operating position to the storage position after it has gone about one-third of the way from the operating position, and Figure 6 shows the retractable roof [2] during the process of changing its position from the operating position to the storage position after it has gone about two-thirds of the way from the operating position.

First, the drive motor [41] begins working, the torque increases due to the reduction gear [43c], and the lower arm [43] begins rotating in the clockwise direction of Figure 3 around the axis of rotation X. Accompanying that rotation, the middle roof panel [24] begins to rotate in the clockwise direction (see Figures 3 and 5).

Accompanying the rotation of the middle roof panel [24], the front roof panel [21], which is connected by a pivoting support to the middle roof panel [24] (upper arm [47]), moves in the opposite way, slanting upward, but the control link [48] is connected by a pivoting support to the front roof panel [21], namely, there is a four-way link between the front roof panel [21] and the main bracket [42], and therefore the front roof panel [21] moves according to a prescribed path.

Also, accompanying the rotation of the middle roof panel [24], there is relative movement between this middle roof panel [24] and the rear window [23] due to the four-way link #2 [45]. In other words, the back window [23] rotates toward the back, while moving forward relative to the middle roof panel [24] that is rotating toward the back.

As the drive motor [41] continues working, the middle roof panel [24] rotates to be roughly on its side (see Figure 6). The front roof panel [21] moves further toward the back and is now located above the middle roof panel [24].

As the drive motor [41] still continues working, the middle roof panel [24] rotates further to the back and is stored in the storage compartment [12] (see Figure 7). At the same time, the front roof panel [21] moves downward so that it is directly above the middle roof panel [24] in the storage compartment [12]. In this way, the front roof panel [21] and middle roof panel [24] are folded one on top of the other. Also, the rear window [23] is folded on the middle roof panel [24] as seen along an axis that extends in the width direction of the vehicle.

The retractable roof [2] changes its position from the storage position to the operating position by a motion opposite to what was described above.

In a retractable roof [2] with this structure, as shown in Figure 1, weatherstripping is provided for the front roof panel [21], middle roof panel [24], and rear window [23]. In more detail, front weatherstripping [5] is provided on the front roof panel [21], from its front edge around its sides, to form a seal with the front header [14] and side windows [15]. Also, middle weatherstripping [6] is provided on the middle roof panel [24], from its front edge to its sides and along its lower edge, to form a seal with the front roof panel [21], side windows [15], and deck lid [3]. And rear weatherstripping [7] is provided on the rear window [23] along its entire perimeter to form a seal with the middle roof panel [24] and deck lid [3]. Furthermore, side weatherstripping [78] is provided on the body of the vehicle [1] where it meets the lower front edge of the middle roof panel [24], to form a seal between the middle roof panel [24] and the body. A drainage hole (not shown in the figure) is formed on the side weatherstripping [78], and a drain cover [79] is provided at the lower position of the side weatherstripping [78] on the side of the rear fender [16] within the vehicle, to catch water that drips from the drainage hole on the side weatherstripping [78] and drain it outside the vehicle.

Next we will give a more detailed explanation of the middle weatherstripping [6] and rear weatherstripping [7].

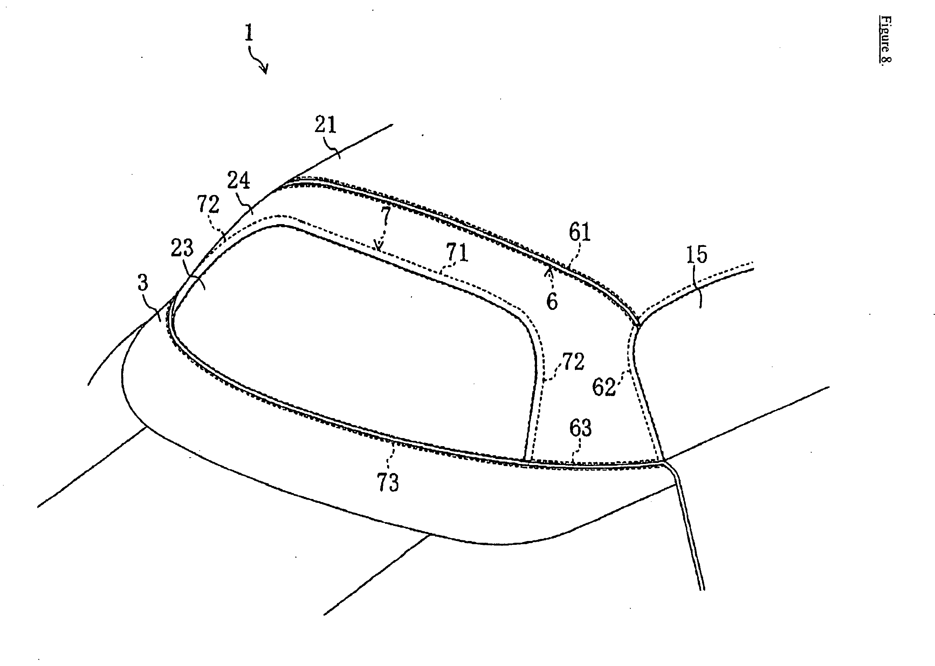

As shown in Figure 8, the middle weatherstripping [6] includes upper middle weatherstripping [61] that forms a seal with the front roof panel [21], side middle weatherstripping [62] that forms a seal with the left and right windows [15] (Figure 8 only shows the right side), and lower middle weatherstripping [63] that forms a seal with the deck lid [3].

The rear weatherstripping [7] includes upper rear weatherstripping [71] and side rear weatherstripping [72, 72] that form a seal with the middle roof panel [24], and lower rear weatherstripping [73] that forms a seal with the deck lid [3].

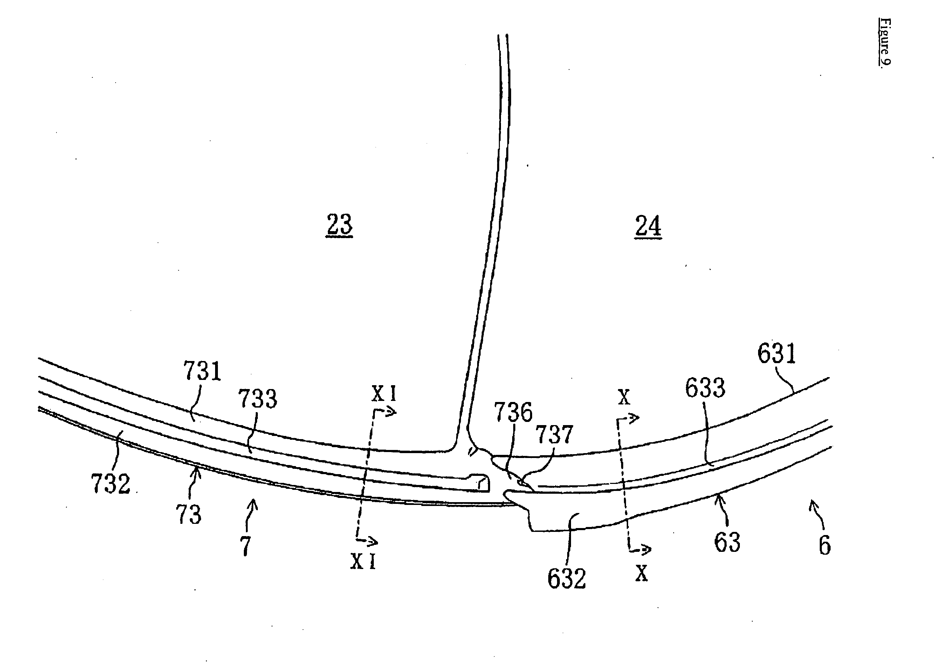

As shown in Figure 9, when the retractable roof [2] is in the closed configuration, the lower middle weatherstripping [63] and lower rear weatherstripping [73] are connected to form a continuous lower weatherstripping. When the retractable roof moves into the closed configuration, the rear window [23] moves against the middle roof panel [24] from inside the vehicle passenger compartment to form the closed configuration, so that the lower rear weatherstripping [73] meets the lower middle weatherstripping [63] (Figure 9 only shows the right side) from inside the vehicle passenger compartment.

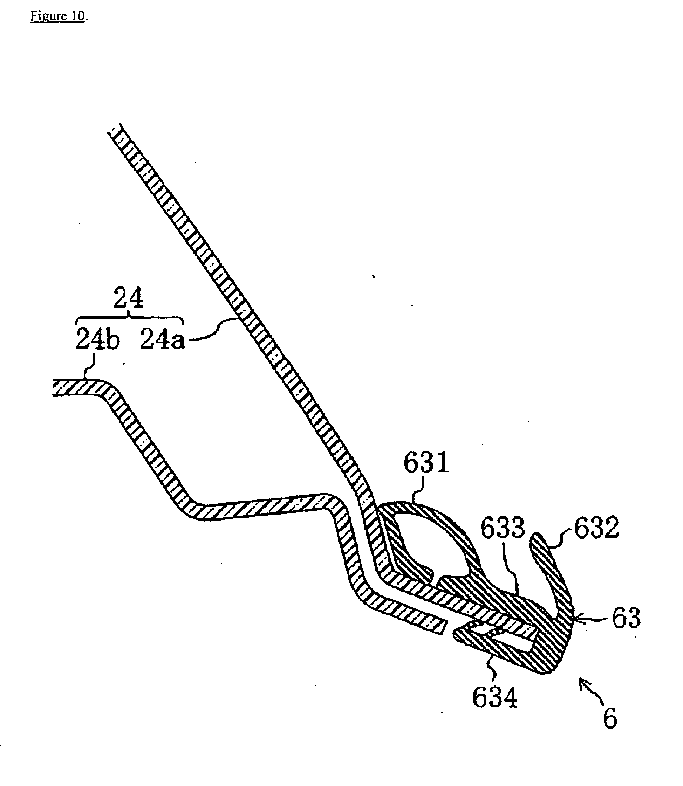

As shown in Figure 10, the middle roof panel [24] has an outer panel [24a] and an inner panel [24b], and the lower middle weatherstripping [63] is attached to the outer panel [24a]. In more detail, the lower middle weatherstripping [63] has a hollow seal portion [631] that extends along the lower edge of the outer panel [24a], a lip portion [632] located further to the outside than the seal portion [631] and extending parallel to the seal portion [631], a middle drainage channel [633] that is formed between the seal portion [631] and the lip portion [632], and a fold-back portion [634] that extends from the lower edge of the lip portion [632] parallel to the bottom of the middle drainage channel [633] folded back on the inside of the outer panel [24a]. The lower middle weatherstripping [63] is attached to the outer panel [24a] so that the bottom of the middle drainage channel [633] and the fold-back portion [634] enclose the lower edge of the outer panel [24a]. Also, at the end of the lower middle weatherstripping [63] that is toward the rear of the vehicle, that is, at the rear window end, the seal portion [631] and lip portion [632] extend out toward the rear window more than does the bottom of the middle drainage channel [633] (see Figure 9).

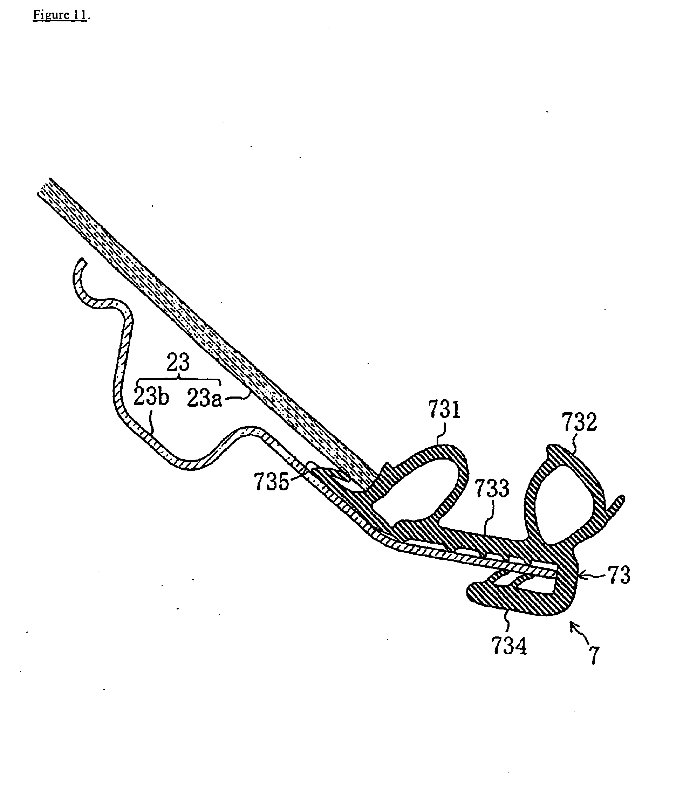

As shown in Figure 11, the rear window [23] has a window member [23a] and a support frame [23b] attached around the edge of the window member [23a], and the lower rear weatherstripping [73] is attached to the support frame [23b]. In more detail, the lower rear weatherstripping [73] has two hollow seal portions [731, 732] that extend in parallel along the lower edge of the support frame [23b], a rear drainage channel [733] that is formed between the seal portions [731, 732], a fold-back portion [734] that extends from the lower edge of the outer seal portion [732] parallel to the bottom of the rear drainage channel [733] folded back on the inside of the support frame [23b], and an extension portion [735] that extends from the lower edge of the inner seal portion [731] inside along the support frame [23b]. The lower rear weatherstripping [73] is attached to the support frame [23b] so that the extension portion [735] is inserted between the window member [23a] and the support frame [23b], and the bottom of the rear drainage channel [733] and the fold-back portion [734] enclose the lower edge of the support frame [23b].

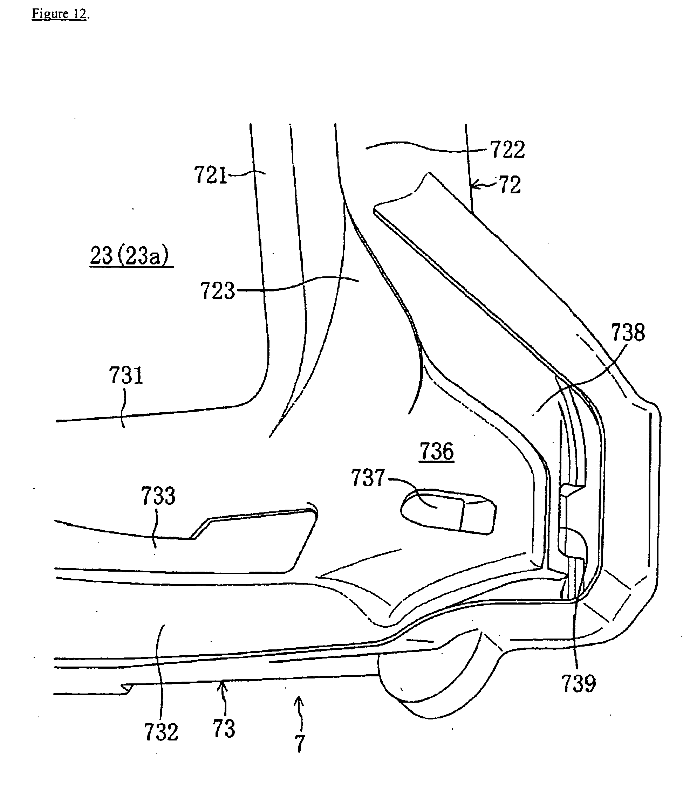

We will explain in more detail the structure of the ends of the lower rear weatherstripping [73]. The left and right ends of the lower rear weatherstripping have the same structure, so we will only explain the right end, making reference to Figure 12. At the end of the lower rear weatherstripping [73] the inner seal portion [731] and outer seal portion [732] are joined above the rear drainage channel [733]. At this junction a contact surface [736] that is connected to the lower middle weatherstripping [63] is formed, and through this contact surface [736] a connecting hole [737] is formed, which connects to the rear drainage channel [733]. The contact surface [736] faces the lower middle weatherstripping [63], and it is an inclined surface that tilts from the outside of the vehicle passenger compartment to the inside.

Also, the side rear weatherstripping [72] is continuous with the inner seal portion [731] at the ends of the lower rear weatherstripping [73] (Figure 12 only shows the right side). The side rear weatherstripping [72] has two seal portions [721, 722] that extend in parallel along the side edge of the rear window [23], and a side drainage channel [723] that is formed between the seal portions [721, 722]. Also, although it isn't shown in the figure, the side rear weatherstripping [72] is attached to the rear window [23] by an attachment mechanism similar to that of the lower rear weatherstripping [73]. The lower edge of the side rear weatherstripping [72] is continuous with the inner seal portion [731] of the lower rear weatherstripping [73], and it is formed so that water that flows into the side drainage channel [723] goes past the seal portion [731] of the lower rear weatherstripping [73] and into the rear drainage channel [733].

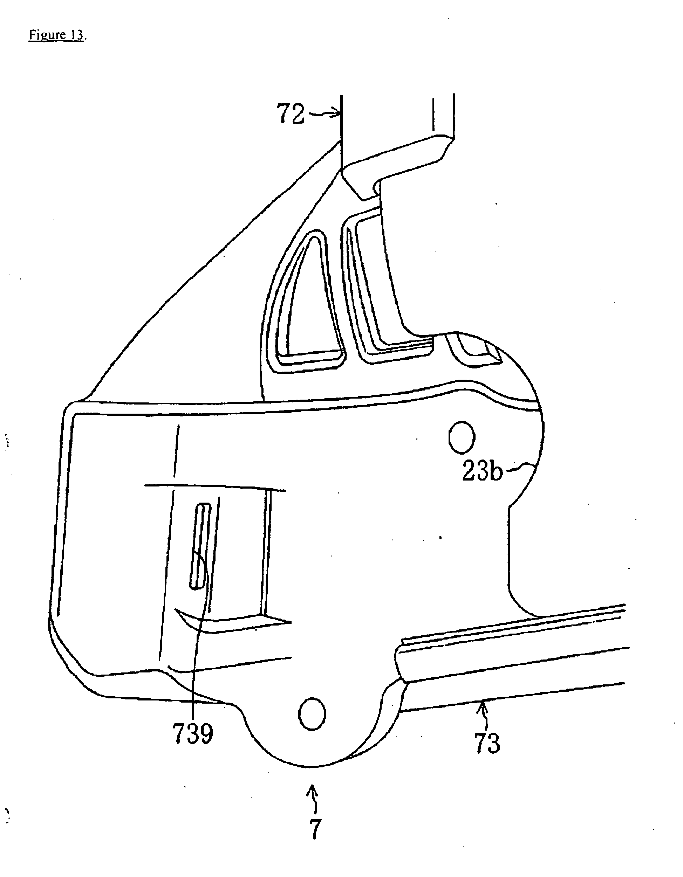

Also, the lower rear weatherstripping [73] has a water-collecting channel [738] that is formed on a portion of the lower middle weatherstripping [63] that is lower than the contact surface [736] and that goes lower inside the vehicle passenger compartment than does the contact surface [736]. This water-collecting channel [738] extends from the lower edge of the outer seal portion [722] of the side rear weatherstripping [72] so as to enclose the contact surface [736]. As shown in Figure 13, the water-collecting channel [738] has a drainage hole [739] that goes through it from the outside of the vehicle passenger compartment to the inside of the vehicle passenger compartment. This water-collecting channel [738] corresponds to the water collector.

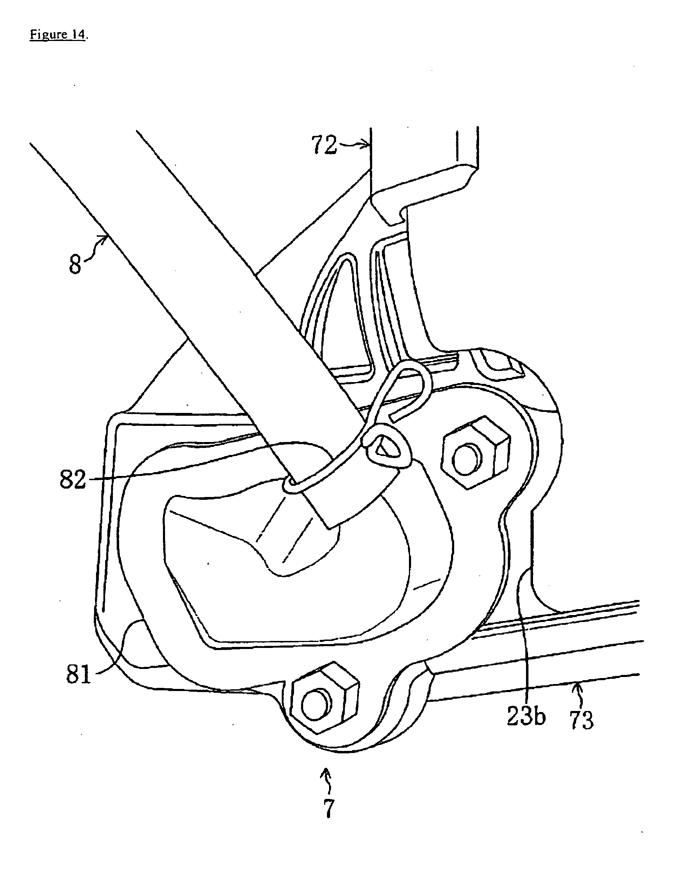

As shown in Figure 14, a collection dish [81] is attached to the edge of the lower rear weatherstripping [73] on the side within the vehicle passenger compartment so as to cover the drainage hole [739] (see Figure 13). A cylindrical connection portion (not shown in the figure) protrudes from the collection dish [81], and the upstream end of a drainage hose [8] is attached to the outside of the connection portion. A hose clip [82] is attached to the upstream end of the drainage hose [8] to prevent the drainage hose [8] from coming off the connection portion.

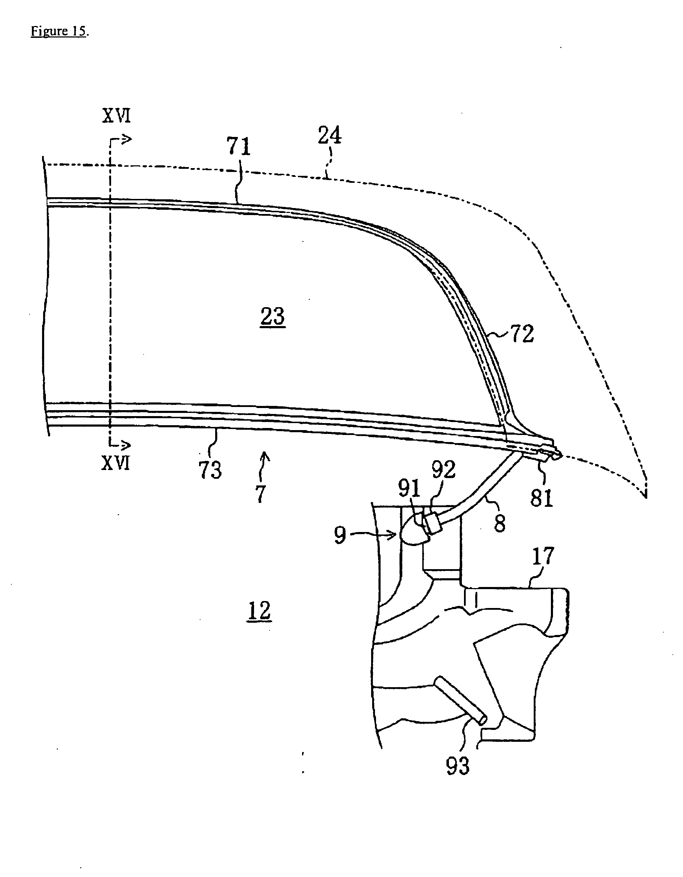

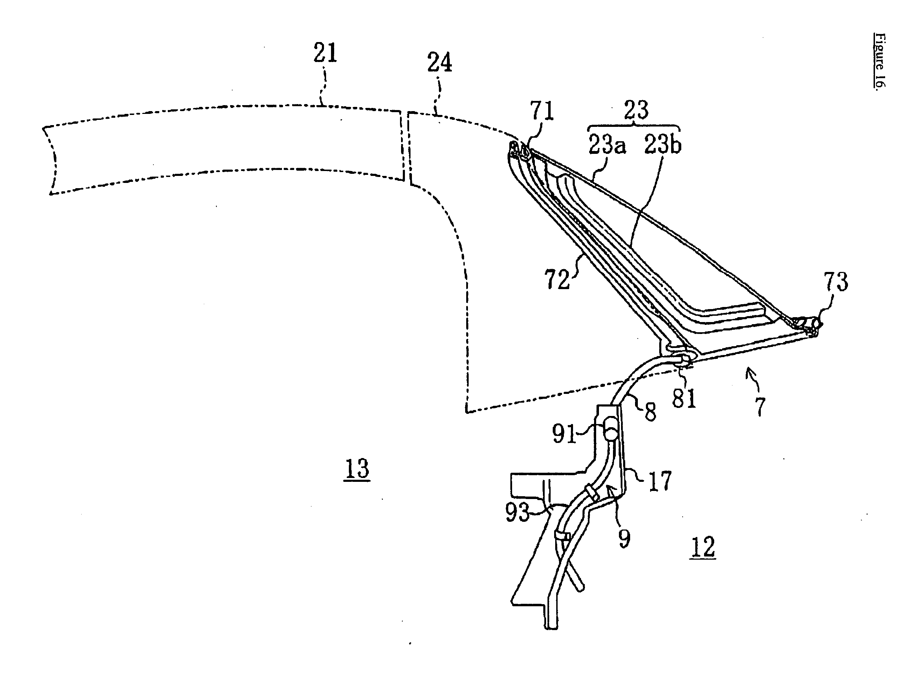

The drainage hose [8] is rubber and is flexible. As shown in Figures 15 and 16, the downstream end of the drainage hose [8] is attached to a vehicle side drain [9] that is provided on a rear side trim [17] that is an internal trim that separates the storage compartment [12] from the vehicle passenger compartment [13].

The vehicle side drain [9] has a cylindrical member [91] that is attached to the rear side trim [17], a cap [92] that is attached to a portion of the cylindrical member [91] that protrudes on the side of the roof storage compartment, and a vehicle side drainage hose [93] that is connected to the portion of the cylindrical member [91] that protrudes on the side of the vehicle passenger compartment. The vehicle side drainage hose is attached in several places to the surface of the rear side trim [17] on the side of the vehicle passenger compartment, and its downstream portion passes through the rear side trim [17] to the side of the roof storage compartment. This isn't shown in the figure, but on the floor of the storage compartment [12], at the lower position of the downstream end of the vehicle side drainage hose [93], there is a floor drain that collects water that drains from the vehicle side drainage hose [93] and allows it to drain outside the vehicle.

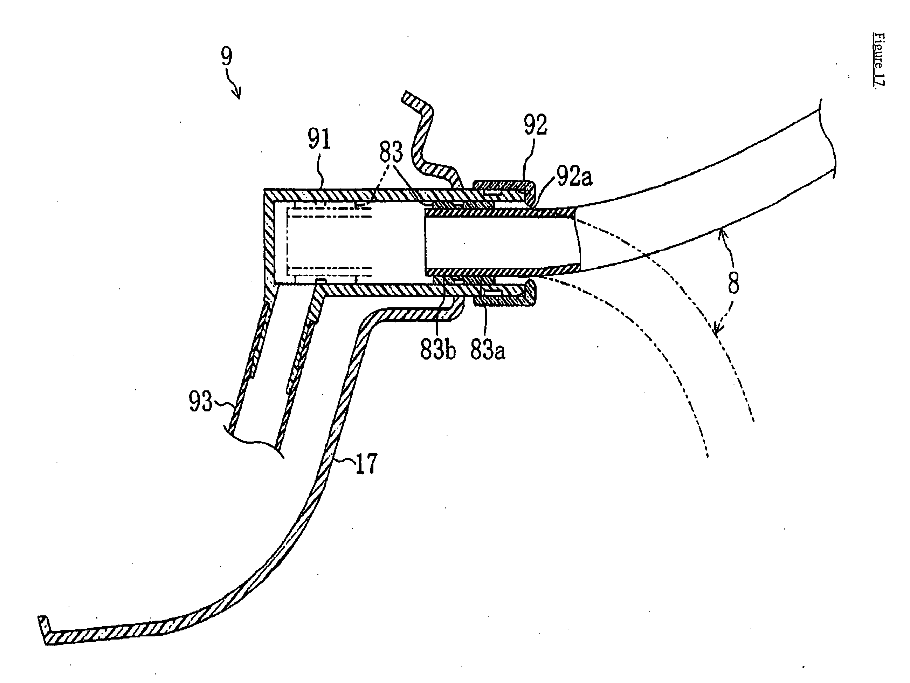

Next we will use Figure 17 to explain in more detail the connection structure of the drainage hose [8] and vehicle side drain [9].

The cap [92] has an insertion hole [92a] whose inner diameter is larger than the outer diameter of the drainage hose [8].

The drainage hose [8] is inserted into the cylindrical portion [91] through the insertion hole [92a] of the cap [92], and a stopper [83] is provided on its downstream end. The stopper [83] has large circular portions [83a, 83b] that fit into the cylindrical member [91]. The outer diameter of these large circular portions [83a, 83b] is larger than the inner diameter of the insertion hole [92a] of the cap [92].

As a result, the drainage hose [8] that is connected to the vehicle side drain [9] can rotate freely with respect to the vehicle side drain [9], and can freely move in and out of the insertion hole [92a] (see the dotted lines in the figure). The outer diameter of the large circular portion [83a] of the stopper [83] is larger than the inner diameter of the insertion hole [92a] of the cap [92], so that the large circular portion [83a] catches on the edge of the opening of the insertion hole [92a] of the cap [92], and the drainage hose [8] does not come out of the vehicle side drain [9]. The length that can freely move in and out is determined by the depth of the cylindrical portion [91]. In other words, by changing the depth it is possible to make the length of the drainage hose [8] that can freely move in and out any desired value.

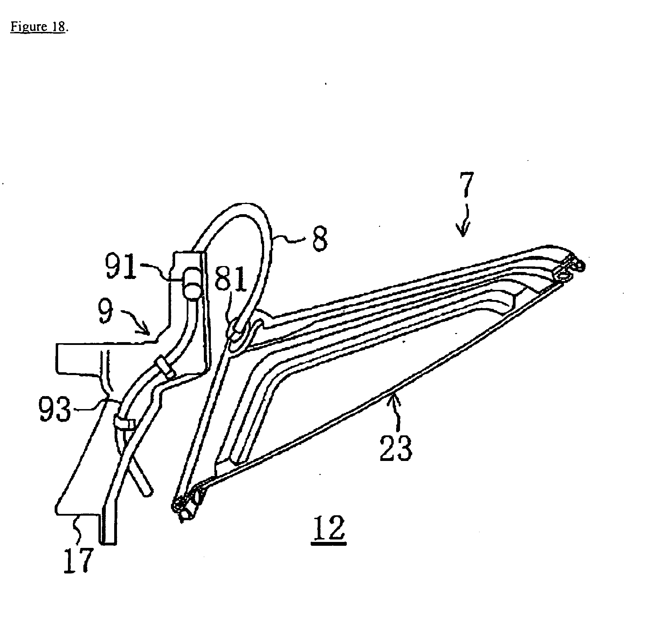

In this way, as shown in Figures 16 and 18, the drainage hose [8] that is connected to the vehicle side drain [9] has its upstream end attached to the rear window [23], with a configuration that can follow along with the opening and closing of the rear window [23]. At such times, accompanying the opening and closing of the rear window [23], the distance between the collection dish [81] on the rear window [23] end and the cap [92] of the vehicle side drain [9] changes, and the axis of the drainage hose [8] twists. The drainage hose [8] freely rotates relative to the insertion hole [92a] and freely moves in and out, and so, responding to the change in the distance between the collection dish [81] and the cap [92] that accompanies the opening and closing of the rear window [23], it can freely move in and out relative to the insertion hole [92a] and, responding to the twisting of the axis of the drainage hose [8], it can freely rotate.

With this type of drainage structure for a retractable roof [2], in particular with a drainage structure on the rear portion of the vehicle, the water that is conveyed along the surface of the rear window [23] and the water that is conveyed along the surface of the middle roof panel [24] flow into the rear drainage channel [733] of the lower rear weatherstripping [73] and the middle drainage channels [633] of the lower middle weatherstripping [63], respectively. Also, the water that flows along the side drainage channels [723] of the side rear weatherstripping [72] flows into the rear drainage channel [733]. The water in the rear drainage channel [733] flows into the middle drainage channels [633] through the connection holes [737] on the left and right ends of the rear drainage channel [733]. The water in the middle drainage channels [633] flows to the front portions of the middle drainage channels [633], where it flows from those front portions into the side weatherstripping [78], and it drips from the side weatherstripping [78] into the drain cover [79], and is drained out of the vehicle through the drain cover [79]. At the junction of the lower middle weatherstripping [63] and lower rear weatherstripping [73] it is possible that the water flowing through the rear drainage channel [733] would not flow well into the middle drainage channels [633], but instead leak from the space between the lower middle weatherstripping [63] and lower rear weatherstripping [73]. In this embodiment there is a water-collecting channel [738] at the edge of the lower rear weatherstripping [73] so the water that leaks in that way will be collected in the water-collecting channel [738]. The water in the water-collecting channel [738] flows through the drainage hole [739] into the collection dish [81] that is on the side of the lower rear weatherstripping [73] within the vehicle passenger compartment, and then is led by the drainage hose [8] to the vehicle side drain [9], and it drains out of the vehicle from the vehicle side drain [9]. The water that flows through the rear drainage channel [733] and middle drainage channels [633] may overflow these drainage channels [733, 633], and the water that overflows is drained along the surface of the deck lid [3] or the surface of the rear fender [16].

Therefore, according to this embodiment, the drainage hose [8] is attached so that it rotates freely with respect to the vehicle side drain [9], and moves freely in and out, so that the drainage hose [8], responding to the opening and closing of the rear window [23], can rotate freely with respect to the vehicle side drain [9], and can freely move in and out.

As a result, when the rear window [23] opens and closes, it is possible to avoid having an excessive force in the twisting direction of the drainage hose [8], or in the direction of its length, which makes it possible to improve the operation durability of the drainage hose [8]. Also, when the rear window [23] opens and closes, as the distance between the collection dish [81] on the side of the rear window [23] and the cap [92] of the vehicle side drain [9] gets shorter, the unneeded length of drainage hose [8] enters the vehicle side drain [9] and is temporarily stored there, so that it is not necessary to provide space in the storage compartment [12] when the drainage hose [8] greatly bends, making it possible to improve the layout of the storage compartment [12]. And, since the drainage hose [8] does not greatly bend, the drainage hose [8] never bends lower than the vehicle side drain [9] when the retractable roof [2] is in the closed configuration, and this prevents water from collecting in the middle of the drainage hose [8], thereby making it possible for it to drain smoothly.

Also, part of the vehicle side drainage hose [93] is laid out on the side of the rear side trim [17] within the vehicle passenger compartment, so it is possible to prevent the vehicle side drainage hose [93] from interfering with the retractable roof [2] when it opens and closes inside the storage compartment [12].

And, on the inside of the vehicle passenger compartment, the drainage hose [8] is connected to one of the lower rear weatherstripping [73] and lower middle weatherstripping [63], namely, to the lower rear weatherstripping, which is the lower of the two, to collect water that drips from the junction of the lower rear weatherstripping [73] and lower middle weatherstripping [63], allowing it to drain from the drainage hose [8]. If the lower middle weatherstripping [63] were lower than the lower rear weatherstripping [73] then the drainage hose [8] would be connected to the lower middle weatherstripping [63] in order to collect water that leaks at the junction and drain it.

### Other Embodiments

This invention may also take the following forms compared to the above embodiment.

In the above embodiment the stopper [83] was attached to the outside of the lower end of the drainage hose [8], but it is also possible to enlarge the outside of part of the drainage hose [8] and form a stopper portion as a unit with it. Also, the place where the stopper (or stopper portion) is located is not limited to the lower end of the drainage hose [8] but may be an arbitrary location on the drainage hose [8] as long as it is located within the cylindrical portion [91]. Furthermore, it is possible to omit the stopper as long as the length of the drainage hose [8] within the cylindrical portion [91] is adequate for the opening and closing of the retractable roof [2].

In the above embodiment, even if a wave-shaped hose were used as the drainage hose [8], rather than eliminating the wave-shaped hose such as one with a twisting shape, then it is possible to improve the operation endurance of such a wave-shaped hose if it can freely rotate with respect to the vehicle side drain [9] and freely move in and out, similar to what was explained above.

In the above embodiment the drainage hose [8] is continuous with the water-collecting channel [738] of the lower rear weatherstripping [73] and it can drain water that leaks at the junction, but it is not limited to this. For example, as in the drainage hose of Patent Reference #1, it is possible to form a drainage hole on the rear drainage channel [733], and connect a drainage hose by passing it through this drainage hole, so that water flowing through the rear drainage channel [733] is drained directly from the drainage hose. Also, the drainage hose [8] is not limited to being connected to the lower rear weatherstripping [73], but may be connected to the lower middle weatherstripping [63].

Also, the above embodiment uses a retractable roof [2] with a three-part construction, but it is not limited to this, and as long as there is a roof that can open and close it is possible to connect a drainage hose [8] as in this embodiment to obtain effects such as improving the operation endurance of the drainage hose, improving the layout, and making the drainage smoother.

### Explanation of Symbols

- 13: Vehicle passenger compartment.
- 2: Retractable roof (roof member).
- 21: Front roof panel (roof member).
- 23: Rear window (roof member).
- 24: Middle roof panel (roof member).
- 63: Lower middle weatherstripping (middle weatherstripping).
- 633: Middle drainage channel (drainage channel).
- 73: Lower rear weatherstripping (rear weatherstripping).
- 733: Rear drainage channel (drainage channel).
- 738: Water-collecting channel (water collector).
- 8: Drainage hose.
- 83: Stopper (stopper portion).
- 9: Vehicle side drain.
- 92a: Insertion hole.

## Claims

1. A vehicle with a retractable roof (2) and a drainage structure for the retractable roof; consisting of a roof member (2,21,23,24) provided so as to be able to move freely between a closed configuration that covers a vehicle passenger compartment (13) and an open configuration in which said vehicle passenger compartment is open,
weatherstripping (63,73) that extends along the edge of said roof member and has a drainage channel (633, 733) that extends along the edge, and
a drainage hose (8) that connects said weatherstripping with a vehicle side drain (9) provided on the side of the vehicle, **characterized in that**
said drainage hose (8) is freely rotatable with respect to said vehicle side drain (9) and is freely moveable in and out of said vehicle side drain (9), and accompanying the opening and closing operation of said roof member said drainage hose freely rotates with respect to said vehicle side drain and moves in and out of said vehicle side drain.

2. A vehicle with a retractable roof and a drainage structure as in Claim 1 such that an insertion hole is provided on said vehicle side drain (9), with a diameter larger than the outer diameter of said drainage hose (8),
and the downstream end of said drainage hose (8) is inserted into said vehicle side drain (9) through said insertion hole (92a), and a stopper is provided at a location within said vehicle side drain (9) to stop said drainage hose (8) from coming out of said insertion hole (92a).

3. A vehicle with a retractable roof and a drainage structure as in Claim 1 or Claim 2 such that
said roof member includes a front roof panel (21) that covers the top of said vehicle passenger compartment (13), a rear window (23) that covers the rear of said vehicle passenger compartment, and a middle roof panel (24) that is located between said rear window and said front roof panel, and said weatherstripping includes middle weatherstripping (63) that extends along the lower edge of said middle roof panel and has a middle drainage channel (633) that extends along the edge, and rear weatherstripping (73) that extends along the lower edge of said rear window and has a rear drainage channel (733) that extends along the edge, and, when said roof member is in said closed configuration, said middle and rear weatherstripping connect to each other to form continuous lower edge weatherstripping in a configuration where the rear drainage channel and middle drainage channel are continuous, and said drainage hose (8) is connected to either part of the weatherstripping at the junction of said rear and middle weatherstripping.

4. A vehicle with a retractable roof and a drainage structure as in Claim 3 such that when said roof member is in said closed configuration, said rear weatherstripping (73) connects to said middle weatherstripping (63) along the inside of the vehicle passenger compartment, and a water collector (738) is provided at the junction to collect water that drips from said rear drain-age channel (733) and said middle drainage channel (633), and said drainage hose (8) is connected to said rear weatherstripping (73) to make it continuous with said water collector (738).

## Patentansprüche

1. Fahrzeug mit einem einziehbaren Dach (2) und einer Ablaufstruktur für das einziehbare Dach, umfassend:
ein Dachglied (2, 21, 23, 24), das so vorgesehen ist, dass es sich zwischen einer geschlossenen Konfiguration, die einen Fahrzeuginnenraum (13) bedeckt, und einer geöffneten Konfiguration, in der der Fahrzeuginnenraum offen ist, frei bewegen kann, einen Dichtungsstreifen (63, 73), der sich entlang dem Rand des Dachglieds erstreckt und einen Ablaufkanal (633, 733) aufweist, der sich entlang dem Rand erstreckt, und
einen Ablaufschlauch (8), der den Dichtungsstreifen mit einem Fahrzeugseitenablauf (9), der an der Seite des Fahrzeugs vorgesehen ist, verbindet, **dadurch gekennzeichnet, dass**
der Ablaufschlauch (8) bezüglich des Fahrzeugseitenablaufs (9) frei drehbar ist und frei in den und aus dem Fahrzeugseitenablauf (9) beweglich ist und sich der Ablaufschlauch beim Öffnungs- und Schließvorgang des Dachglieds bezüglich des Fahrzeugseitenablaufs frei dreht und sich in den und aus dem Fahrzeugseitenablauf bewegt.

2. Fahrzeug mit einem einziehbaren Dach und einer Ablaufstruktur nach Anspruch 1, wobei ein Führungsloch an dem Fahrzeugseitenablauf (9) vorgesehen ist, dessen Durchmesser größer ist als der Außendurchmesser des Ablaufschlauchs (8);
und das stromabwärtige Ende des Ablaufschlauchs (8) durch das Einführungsloch (92a) in den Fahrzeugseitenablauf (9) eingeführt ist und ein Anschlag an einer Stelle in dem Fahrzeugseitenablauf (9) vorgesehen ist, um zu verhindern, dass der Ablaufschlauch (8) aus dem Einführungsloch (92a) herauskommt.

3. Fahrzeug mit einem einziehbaren Dach und einer Ablaufstruktur nach Anspruch 1 oder 2, wobei das Dachglied eine vordere Dachbeplankung (21), die die Oberseite des Fahrzeuginnenraums (13) bedeckt, ein Heckfenster (22), das das Heck des Fahrzeuginnenraums bedeckt, und eine mittlere Dachbeplankung (24), die zwischen dem Heckfenster und der vorderen Dachbeplankung positioniert ist, enthält
und der Dichtungsstreifen einen mittleren Dichtungsstreifen (63), der sich entlang dem unteren Rand der mittleren Dachbeplankung erstreckt und einen mittleren Ablaufkanal (633) aufweist, der sich entlang dem Rand erstreckt, und einen hinteren Dichtungsstreifen (73), der sich entlang dem unteren Rand des Heckfensters erstreckt und einen hinteren Ablaufkanal (733) aufweist, der sich entlang dem Rand erstreckt, enthält, und, wenn sich das Dachglied in der geschlossenen Konfiguration befindet, der mittlere und der hintere Dichtungsstreifen miteinander verbunden sind, um einen durchgehenden Dichtungsstreifen des unteren Rands in einer Konfiguration zu bilden, in der der hintere Ablaufkanal und der mittlere Ablaufkanal durchgehend sind, und der Ablaufschlauch (8) an der Verbindungsstelle des hinteren und des mittleren Dichtungsstreifens mit einem der Teile des Dichtungsstreifens verbunden ist.

4. Fahrzeug mit einem einziehbaren Dach und einer Ablaufstruktur nach Anspruch 3, wobei, wenn sich das Dachglied in der geschlossenen Konfiguration befindet, der hintere Dichtungsstreifen (73) mit dem mittleren Dichtungsstreifen (63) entlang der Innenseite des Fahrzeuginnenraums verbunden ist und ein Wasserfänger (738) an der Verbindungsstelle vorgesehen ist, um von dem hinteren Ablaufkanal (733) und dem mittleren Ablaufkanal (633) tropfendes Wasser aufzufangen, und der Ablaufschlauch (8) mit dem hinteren Dichtungsstreifen (73) verbunden ist, um ihn durchgehend mit dem Wasserfänger (738) zu machen.

## Revendications

1. Véhicule avec un toit rétractable (2) et une structure de drainage pour le toit rétractable, constitué
d'un organe de toit (2, 21, 23, 24) prévu de manière à pouvoir se déplacer librement entre une configuration fermée qui recouvre un compartiment passager (13) du véhicule et une configuration ouverte dans laquelle ledit compartiment passager du véhicule est ouvert,
d'une garniture d'étanchéité (63, 73) qui s'étend le long du bord dudit organe de toit et qui présente un canal de drainage (633, 733) qui s'étend le long du bord, et
d'un tuyau de drainage (8) qui raccorde ladite garniture d'étanchéité à un drain latéral (9) de véhicule prévu sur le côté du véhicule,
**caractérisé en ce que**
ledit tuyau de drainage (8) peut tourner librement par rapport audit drain latéral (9) de véhicule et peut être déplacé librement dans et hors dudit drain latéral (9) de véhicule, et, en accompagnant l'opération d'ouverture et de fermeture dudit organe de toit, ledit tuyau de drainage tourne librement par rapport audit drain latéral de véhicule et se déplace dans et hors dudit drain latéral de véhicule.

2. Véhicule avec un toit rétractable et une structure de drainage selon la revendication 1, un trou d'insertion étant prévu sur ledit drain latéral (9) de véhicule, avec un diamètre plus grand que le diamètre extérieur dudit tuyau de drainage (8), et l'extrémité aval dudit tuyau de drainage (8) étant insérée à l'intérieur dudit drain latéral (9) de véhicule à travers ledit trou d'insertion (92a), et un bouchon étant prévu en un emplacement à l'intérieur dudit drain latéral (9) de véhicule pour empêcher ledit tuyau de drainage (8) de ressortir dudit trou d'insertion (92a).

3. Véhicule avec un toit rétractable et une structure de drainage selon la revendication 1 ou la revendication 2,
ledit organe de toit comportant un panneau de toit avant (21) qui recouvre le dessus dudit compartiment passager (13) du véhicule, une fenêtre arrière (23) qui recouvre l'arrière dudit compartiment passager du véhicule, et un panneau de toit central (24) qui est situé entre ladite fenêtre arrière et ledit panneau de toit avant, et ladite garniture d'étanchéité comportant une garniture d'étanchéité centrale (63) qui s'étend le long du bord inférieur dudit panneau de toit central, et ayant un canal de drainage central (633) qui s'étend le long du bord, et une garniture d'étanchéité arrière (73) qui s'étend le long du bord inférieur de ladite fenêtre arrière et qui a un canal de drainage arrière (733) qui s'étend le long du bord, et, lorsque ledit organe de toit est dans ladite configuration fermée, lesdites garnitures d'étanchéité centrale et arrière se raccordant l'une à l'autre pour former une garniture d'étanchéité de bord inférieur continue dans une configuration dans laquelle le canal de drainage arrière et le canal de drainage central sont continus, et ledit tuyau de drainage (8) étant raccordé à l'une ou l'autre partie de la garniture d'étanchéité au niveau de la jonction de ladite garniture d'étanchéité arrière et de ladite garniture d'étanchéité centrale.

4. Véhicule avec un toit rétractable et une structure de drainage selon la revendication 3, ladite garniture d'étanchéité arrière (73), lorsque ledit organe de toit est dans ladite configuration fermée, se raccordant à ladite garniture d'étanchéité centrale (63) le long de l'intérieur du compartiment passager du véhicule, et un collecteur d'eau (738) étant prévu au niveau de la jonction pour recueillir l'eau qui s'égoutte dudit canal de drainage arrière (733) et dudit canal de drainage central (633), et ledit tuyau de drainage (8) étant raccordé à ladite garniture d'étanchéité arrière (73) pour la rendre continue avec ledit collecteur d'eau (738).
